Europäisches Patentamt

European Patent Office

Office européen des brevets

(19)

(11) Veröffentlichungsnummer: **0 112 448**
**B1**

(12) **EUROPÄISCHE PATENTSCHRIFT**

(45) Veröffentlichungstag der Patentschrift:
**01.04.87**

(51) Int. Cl.⁴: **B 64 C 39/02,** B 64 C 9/00

(21) Anmeldenummer: **83110151.4**

(22) Anmeldetag: **12.10.83**

(54) **Flugkörper mit stark gepfeiltem Tragwerk, insbesondere Deltaflügeln.**

(30) Priorität: **05.11.82 DE 3240903**

(43) Veröffentlichungstag der Anmeldung:
**04.07.84 Patentblatt 84/27**

(45) Bekanntmachung des Hinweises auf die Patenterteilung:
**01.04.87 Patentblatt 87/14**

(84) Benannte Vertragsstaaten:
**FR GB IT**

(56) Entgegenhaltungen:
**GB - A - 1 571 813**
**GB - A - 2 104 853**
**LU - A - 41 546**
**US - A - 4 037 808**
**US - A - 4 247 063**

(73) Patentinhaber: **DORNIER GMBH, Postfach 1420,**
**D-7990 Friedrichshafen 1 (DE)**

(72) Erfinder: **Friedel, Franz, Uhlandstrasse 6,**
**D-7991 Oberteuringen (DE)**
Erfinder: **Frühauf, Werner, Unterer Höhenweg 24,**
**D-7775 Bermatingen (DE)**
Erfinder: **Harms, Günter, Mövenstrasse 12,**
**D-7990 Friedrichshafen (DE)**
Erfinder: **Helse, Georg, Dipl.-Ing., Spiegelberg 5,**
**D-7997 Immenstaad (DE)**
Erfinder: **Lükewille, Heinrich, Dipl.-Ing., zu den Eichen 5,**
**D-7777 Salem 2 (DE)**

(74) Vertreter: **Landsmann, Ralf, Dipl.-Ing., Kleeweg 3,**
**D-7990 Friedrichshafen 1 (DE)**

## Beschreibung

Die Erfindung betrifft einen unbemannten Flugkörper mit stark gepfeiltem Tragwerk, insbesondere Deltaflügeln, der in einem Behälter transportiert und aus dem Behälter mittels eines Hilfsantriebs nach Lösung einer Arretierung gestartet wird und der während des Marschfluges durch ein Propellertriebwerk antreibbar ist, wobei der Flugkörper Mittel zur selbsttätigen Zielsuche in Verbindung mit aerodynamisch wirkenden Steuerflächen zur Flugbahnkorrektur enthält.

Flugkörper der genannten Art erhalten während des Zielanfluges Lenksignale, die über entsprechende Stelleinrichtungen Ausschlagbewegungen von aerodynamisch wirkenden Steuerflächen auslösen.

Durch nicht kompensierbare Fehler der Suchkopfinformation ist ein stabiler Anflug, insbesondere bei notwendig werdenden Bahnkorrekturen in konventionellen Roll-Zieh-Verfahren (bank to turn) nicht möglich.

Ein stabiler Zielanflug kann nur erreicht werden, wenn die Bahnkorrekturen durch Seitenkraft- und Auftriebssteuerung bewirkt werden. Zu diesem Zweck sind bei den genannten Flugkörpern Auftriebsflächen in der die z- und x-Achse des Flugkörpers enthaltenden Ebene erforderlich.

Aufgabe der vorliegenden Erfindung ist es, Auftriebsflächen für die Seitenstabilisierung vorzusehen, die während des Zielanfluges wirksam werden und einen vorgegebenen hohen Anstieg der Seitenkraft bewirken. Die Seitenkraftflächen sollen dabei eine möglichst grosse Spannweite aufweisen und während des Marsch- und Suchfluges den Luftwiderstand des Flugkörpers nicht vergrössern. Ferner sollen die Flugkörper so ausgebildet sein, dass geringstmögliche Abmessungen für den Aufnahmebehälter erreicht werden.

Die Lösung der gestellten Aufgabe ist erfindungsgemäss dadurch gelöst, dass

a) zusätzlich zu den aerodynamisch wirkenden, verstellbaren Steuerflächen bzw. deren feststehenden Flossen zu beiden Seiten der die x-Achse einschliessenden senkrechten Längsmittelebene (E-E) und spiegelbildlich in bezug auf die die y-Achse einschliessende horizontale Längsmittelebene (E'-E') Seitenkraftflächen angeordnet sind, dass

b) die Seitenkraftflächen um parallel zur Flugkörperquerachse y verlaufende Achsen in Ebenen parallel zur senkrechten Längsmittelebene (E-E) ein- bzw. ausschwenkbar angeordnet sind und dass

c) für die Aufnahme der eingeschwenkten Seitenkraftflächen innerhalb der Tragflügelkontur im Bereich der Flügelwurzel und vor dem vorderen Flügelstrukturholm Aufnahmeräume gebildet sind.

Durch die erfindungsgemässe Ausbildung sind Seitenkraftflächen mit grosser Spannweite parallel zur Strömungsrichtung und senkrecht zu den Tragflügeln einsetzbar, wobei die Flächen während des Marsch- und Suchfluges durch Aufnahme in Räumen innerhalb der Flügelstruktur keinen oder nur geringfügigen Luftwiderstand erzeugen.

Die Anordnung von Seitenkraftflächen grosser Spannweite wird durch die Ausnutzung der Form stark gepfeilter Tragflügel, insbesondere im Bereich der Flügelwurzel erreicht. Da die Seitenkraftflächen nur bei Bedarf, d.h. während des Zielanfluges in ihre Ausfahrstellung ausgeklappt werden, wird eine Beeinträchtigung des Fluges durch erhöhten Luftwiderstand, hervorgerufen durch die Seitenkraftflächen, vermieden. Durch paarweises Ausfahren der Seitenkraftflächen in senkrechte Stellungen oberhalb und unterhalb der waagerechten Längsmittelebene des Fluggerätes, wird keine Veränderung des Schiebe-Rollmomentes hervorgerufen.

Der Drehpunkt, um den die Seitenkraftflächen ausgeschwenkt werden, ist so angeordnet, dass die Windfahnenstabilität des Flugkörpers durch die ausgefahrenen Seitenkraftflächen nicht verändert wird. Ferner kann der Aufnahmebehälter wesentlich geringere Abmessungen bezüglich seiner Höhe erhalten.

Es ist demgegenüber ein raketengetriebener Flugkörper bekannt, bei dem im Bereich des im Querschnitt kreisförmigen Rumpfhecks eine Strahlaustrittsdüse angeordnet ist und der besonderen Form solcher Düsen entsprechend, innerhalb der Flugkörperrumpfkontur Aufnahmeräume für ausklappbare Leitflächen vorgesehen sind. Die bekannten Leitflächen sind als reine Stabilisierungsflächen vorgesehen, die ausgeklappt werden, sobald der Flugkörper seine Abschusseinrichtung verlassen hat (LU-A 41 546).

Weitere Merkmale sind aus der Zeichnung und der Beispielsbeschreibung ersichtlich.

In der Zeichnung ist ein Ausführungsbeispiel gemäss der Erfindung dargestellt, das nachfolgend näher beschrieben ist. Es zeigt:

Fig. 1 in perspektivischer, schematischer Darstellung einen Flugkörper, bei dem die Seitenkraftflächenpaare in Ausfahrstellung stehen,

Fig. 1a in schematischer Darstellung und in Perspektive den Flugkörper in Verbindung mit dem Aufnahmebehälter,

Fig. 2 in perspektivischer und schematischer Darstellung den Aufbau der Flugkörper- und Flügelstruktur,

Fig. 3 einen teilweisen Querschnitt nach der Linie III-III der Figur 1 durch einen Tragflügel und

Fig. 4 in einem Schnitt nach der Linie IV-IV der Figur 3 Einzelheiten der Anordnung der Seitenkraftflächen.

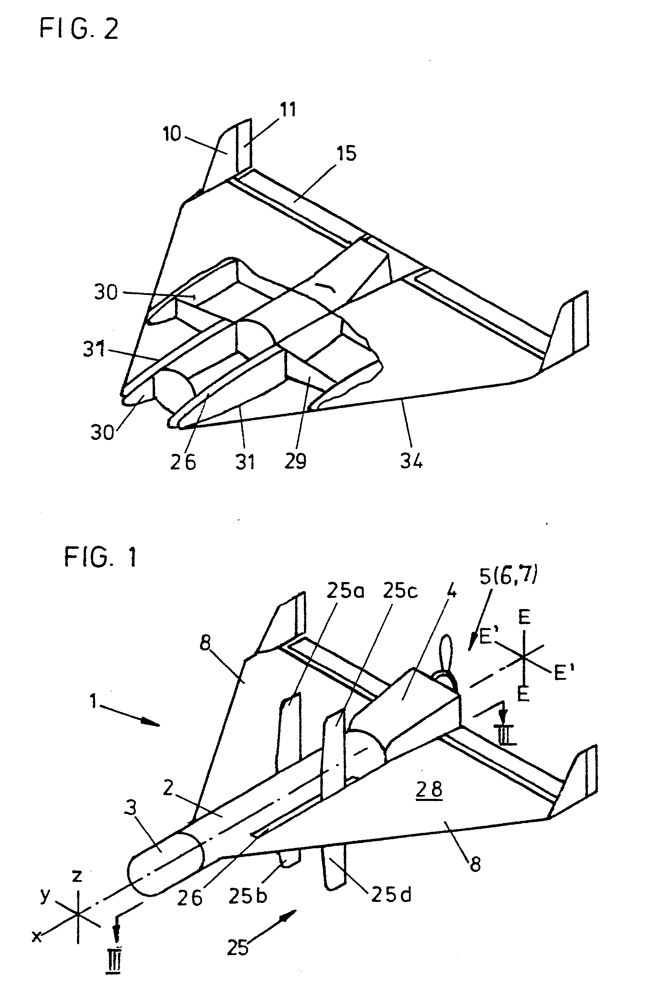

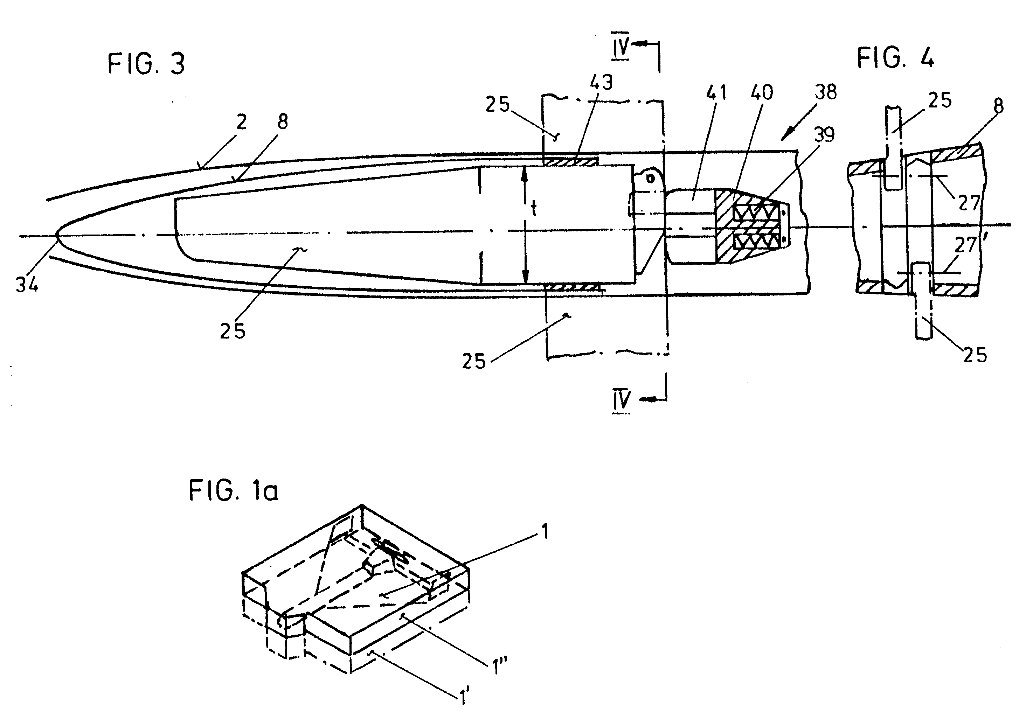

Gemäss der Ausführung nach Figur 1 bis 4 ist der Flugkörper insgesamt mit 1, der Flugkörperrumpf mit 2 und der Bugabschnitt des Rumpfes mit 3 bezeichnet. Der Rumpfbug 3 dient hierbei zur Aufnahme einer Zielsucheinrichtung bekannter Bauart.

Ferner dient der rückwärtige Abschnitt 4 des Rumpfes 2 zur Aufnahme der hier aus einem Kolbenmotor 7 zum Antrieb eines Propellers 6 und einer Getriebeeinheit gebildeten Antriebsanlage 5 für den Marschflug. Innerhalb des Rumpfabschnitts 4 ist ferner eine hier nicht dargestellte Startrakete für das Starten des Flugkörpers 1 aus dem Behälter 1', 1'' angeordnet.

In Figur 1a sind Behälter 1' bzw. 1'' gezeigt, die zur Aufnahme je eines Flugkörpers für den Transport und den Start dienen. Es kann eine beliebige Anzahl von Behältern, z.B. für die Aufnahme auf einem Kraftfahrzeug über- und nebeneinanderliegend gestapelt angeordnet sein.

Der Start der Flugkörper 1 aus dem Behälter 1' bzw. 1'' erfolgt mit Hilfe der erwähnten Startrakete, wobei der Propeller 6 stillsteht, das Kolbentriebwerk 7 jedoch bereits läuft. Nachdem der Flugkörper 1 seinen Behälter 1' bzw. 1'' verlassen hat, übernimmt die Antriebsanlage 5 den Vortrieb. Das Tragwerk des Flugkörpers 1 besteht bei dem gezeigten Ausführungsbeispiel aus den Deltaflügeln 8. Im Bereich der Flügelspitzen beider Flügel 8 sind Seitenruderflossen 10 mit verstellbaren Seitensteuerflächen 11 angeordnet. Ferner sind zur Flugkörpersteuerung an der Hinterkante beider Flügel 8, sowohl als Höhen- als auch als Querruder dienende Ruderflächen 15 verstellbar angeordnet. Die Steuerung des Flugkörpers 1 um seine Querachse y bzw. um seine Längsachse x wird durch einander überlagernde Steuerbewegungen der Seitensteuerflächen 11 bzw. der Seitensteuerflächen und Querruder in bekannter Weise bewirkt.

Im Bereich der Quer- bzw. Höhenruder 15 bzw. im Bereich der beiden Seitensteuerflächen 11 sind für deren Betätigung Stelleinheiten angeordnet, die in bekannter Weise aus einem an den Rudern angreifenden Antriebsmotor in Verbindung mit einem Stellgetriebe und einen über Funk ansteuerbaren Empfänger, sowie einer Schalteinrichtung bestehen. Der Vereinfachung halber sind die in ihrem Aufbau und ihrer Wirkungsweise bekannten Steuerelemente hier nicht dargestellt. Zur Seitenführung des Flugkörpers 1 sind erfindungsgemäss Seitenkraftflächen 25 angeordnet, die insbesondere in der Zielendanflugphase der Flugmission wirksam sein sollen.

Bei dem gezeigten Ausführungsbeispiel sind zwei Paare solcher Seitenkraftflächen 25a, 25b bzw. 25c, 25d vorgesehen. Die Flächenpaare 25a, 25b bzw. 25c, 25d erstrecken sich, bezogen auf ihre Flächentiefe t bzw. ihre Spannweite je in Ebenen, die zu beiden Seiten der senkrechten Längsmittelebene E-E des Flugkörpers 1 liegen und zu dieser parallel verlaufen, wobei die Flächen 25a, 25b bzw. 25c, 25d eines Paares zur horizontalen Längsmittelebene E'-E' eine spiegelbildliche Lage einnehmen. Die oberen bzw. unteren Flächen 25a, 25c bzw. 25b, 25d der beiden Flächenpaare stehen in einem gleichen seitlichen Abstand zur senkrechten Längsmittelebene E-E des Flugkörpers 1. Es ist weiter vorgesehen, die Seitenkraftflächen 25 um Achsen 27, 27', die parallel zur Flugkörperquerachse y gerichtet sind, in Aufnahmeräume 26 innerhalb der umströmten Flügelbeplankung 28 einklappbar anzuordnen, um einerseits während der Marsch- und Suchphase des Flugkörpers die Erzeugung zusätzlichen Widerstandes durch die Seitenkraftflächen zu vermeiden und andererseits die Behälterabmessungen möglichst gering zu halten. Die Seitenkraftflächen 25 eines Paares sind dabei so angeordnet, dass die Flächen in eingeklapptem Zustand nahe nebeneinander, also Seite an Seite liegen, so dass die Tiefe t der Flächen 25 entsprechend dem Dickenverlauf der Flügel maximal ausgeführt sein kann (Figur 3 bzw. 4). Es ist auch eine Ausführung denkbar, bei der die Flächen 25 eines Paares nahe der Ebene E-E liegend angeordnet und in entsprechende Räume am Flugkörperrumpf 2 einfahrbar sind.

Figur 1 lässt den allgemein üblichen Aufbau der Struktur des Flugkörpers und insbesondere der Deltaflügel 8 erkennen. Die Struktur der Flügel 8 enthält Holme und Rippen, sowie Stringer und die Beplankung 28. Bei der gezeigten Ausführung ist der vordere Holm mit 29 bezeichnet, der in einem relativ grossen Abstand von der Tragflügelvorderkante bezogen auf den Anschluss der Flügelvorderkante 34 an den Flugkörperrumpf 2 quer zur Flugkörperlängsachse x verläuft. Mit dem Holm 29 sind Rippen 30 des Rumpfes 2 und weitere Rippen 30 der Flügel 8 in bekanntem Aufbau vereinigt. In geringem seitlichem Abstand zu den Rippen 30 sind am Vorderholm 29 feste Rippenteile 31 zu beiden Seiten des Rumpfes 2 vorgesehen. Zwischen den Rippen 30 und 31 jeden Tragflügels 8 sind die Aufnahmeräume 26 für die Aufnahme der Seitenkraftflächen 25 gebildet. Die Aufnahmeräume 26 in unmittelbarer Nachbarschaft des Flugkörperrumpfes 2 erlauben im Hinblick auf die bei Delta-Flügeln gegebenen Abmessungen, bezüglich der Profildicke in Rumpfnähe und die sich relativ weit vom vorderen Holm 29 in Richtung zum Rumpfbug erstreckende Vorderkante 34 der Flügel 8, einen freien Raum mit relativ grosser Abmessung. Die Spannweite und die Tiefe t der Seitenkraftflächen 25 ist zur Erzielung einer einwandfreien Stabilisierung diesen Abmessungen entsprechend ausgeführt. Die Flächen 25a, 25b bzw. 25c, 25d jeden Paares sind gemäss der Ausführung nach Figur 1 bis 3 so angeordnet, dass sie innerhalb der Aufnahmeräume 26 sich gegenseitig überdeckend nebeneinander liegen (Figur 3 bzw. 4). Der Flächenumriss stimmt dabei etwa mit der Querschnittskontur der Flügel 8 im Bereich der Flügelwurzel überein. Die Rippen 30, 31 nehmen die Schwenkachsen 27, 27' der Flächen 25 auf. Die Flächen eines Paares werden gegenläufig aus der Einfahrlage in die wirksame Stellung geschwenkt. Es können zur Verminderung des Luftwiderstandes Abdeckungen für die schlitzförmigen Öffnungen in der Tragflügelbeplankung 28, die für den Durchtritt der Seitenkraftflächen 25 dienen, vorgesehen sein.

Zum Ausfahren der Flächen 25 in die wirksame Stellung ist nach Figur 3 eine Auslösevorrichtung 38 vorgesehen, die ein durch vorgespannte Schraubendruckfedern 39 betätigbares Stellglied 40 enthält. Das Stellglied 40 besitzt Nocken 41, die auf die frei schwenkbaren Seitenkraftflächen 25 im Sinne einer Ausklappbewegung einwirken. Die zugehörige Entriegelung für das federbelastete Stellglied 40 ist in bekannter Weise ausgebildet und hier nicht dargestellt. Die Auslösung kann durch eine Fernsteuerung bewirkt werden.

**Patentansprüche**

1. Unbemannter Flugkörper (1) mit stark gepfeiltem Tragwerk, insbesondere Deltaflügeln (8), der in einem Behälter (1', 1'') transportiert und aus dem Behälter mittels eines Hilfsantriebs nach Lösung einer Arretierung gestartet wird und der während des Marschfluges durch ein Propellertriebwerk (6, 7) antreibbar ist, wobei der Flugkörper Mittel zur selbsttätigen Zielsuche in Verbindung mit aerodynamisch wirkenden Steuerflächen (11, 15) zur Flugbahnkorrektur enthält, dadurch gekennzeichnet, dass

a) zusätzlich zu den aerodynamisch wirkenden, verstellbaren Steuerflächen (11) bzw. deren feststehenden Flossen (10) zu beiden Seiten der die x-Achse einschliessenden senkrechten Längsmittelebene (E-E) und spiegelbildlich in bezug auf die die y-Achse einschliessende horizontale Längsmittelebene (E'-E') Seitenkraftflächen (25a, 25b bzw. 25c, 25d) angeordnet sind, dass
b) die Seitenkraftflächen (25) um parallel zur Flugkörperquerachse y verlaufende Achsen (27, 27') in Ebenen parallel zur senkrechten Längsmittelebene (E-E) ein- bzw. ausschwenkbar angeordnet sind und dass
c) für die Aufnahme der eingeschwenkten Seitenkraftflächen (25) innerhalb der Tragflügelkontur im Bereich der Flügelwurzel und vor dem vorderen Flügelstrukturholm (28) Aufnahmeräume (26) gebildet sind.

2. Flugkörper nach Anspruch 1, dadurch gekennzeichnet, dass jede der Seitenkraftflächen (25a, 25b bzw. 25c, 25d) in bezug auf die Profiltiefe (t) und Klappenlänge zumindest annähernd der Querschnittskontur der Tragflügel (8) im Bereich der Flügelwurzel vor dem vorderen Holm (29) bemessen ist.

3. Flugkörper nach Anspruch 1 oder 2, dadurch gekennzeichnet, dass den Seitenkraftflächen (25) für die Ausfahrbewegung eine wahlweise betätigbare Ausfahrvorrichtung (38) zugeordnet ist, die sich an feststehenden Teilen abstützende, durch vorgespannte Federungen (39) verstellbare und auf die Seitenkraftflächen (25) im Sinne einer Ausklappbewegung einwirkende Stellglieder (40) enthält.

**Claims**

1. Unmanned missile with strongly backswept wing unit, in particular with delta wings, which is transported in a container and is launched from the container by means of an auxiliary drive after release of a lock and which is drivable during cruise flight by a propeller engine, the missile containing means for automatic target indentification in connection with aerodynamic control surfaces for flight path correction characterized in that

a) in addition to the aerodynamic, adjustable control surfaces or their fixed fins, lateral force surfaces are arranged on either side of the vertical longitudinal median plane encompassing the x-axis and in mirror symmetry relative to the horizontal longitudinal median plane encompassing the y-axis; that
b) the lateral force surfaces are arranged pivotable about axes parallel to the lateral axis of the missile in planes parallel to the vertical longitudinal median plane; and that
c) to accomodate the lateral force surfaces, receiving spaces are formed within the wing contour in the region of the wing root and before the front wing structure spar.

2. Missile according to Claim 1, characterized in that each of the lateral force surfaces is dimensioned with respect to the profile depth and the extension at least approximately (in accordance with) the cross-sectional contour of the wings in the region of the wing root.

3. Missile according to Claim 1 or 2, characterized in that there is associated with the lateral force surfaces for the deploying movement a selectively operable deploying device which contains positioning members taking support on fixed parts, which positioning members are adjustable by tensioned spring systems and act on the lateral force surfaces in the sense of a fold-out movement.

**Revendications**

1. Engin volant téléguidé à aile en forte flèche, particulièrement une aile delta, qui est transporté dans un conteneur et est lancé à partir du conteneur au moyen d'un mécanisme de lancement auxiliaire après dégagement d'un blocage, et peut être entraîné pendant le vol de croisière par un mécanisme de propulsion à hélice, l'engin volant comprenant des moyens de recherche automatique de cible en liaison avec des gouvernes à effet aérodynamique en vue de la correction de la trajectoire, caractérisé par le fait que:
a) en plus des gouvernes réglables à effet aérodynamique (11), ou de leurs plans fixes (10), des surfaces de stabilisation latérale (25a, 25b et respectivement 25c, 25d) sont disposées sur les deux côtés du plan central longitudinal vertical (E-E) contenant l'axe x et de façon symétrique par rapport au plan central longitudinal horizontal (E'-E') contenant l'axe y,
b) les surfaces de stabilisation latérale (25) sont montées de façon à pivoter pour rentrer et sortir autour d'axes (27, 27') parallèles à l'axe transversal de l'engin volant dans des plans parallèles au plan central longitudinal vertical (E-E) et,
c) des espaces de réception (26) sont constitués pour recevoir les surfaces de stabilisation latérale (25) à l'état rentré à l'intérieur du contour de l'aile portante dans la région de la racine de l'aile et à l'avant du longeron avant (28) de la structure de l'aile.

2. Engin volant selon la revendication 1, caractérisé par le fait que chacune des surfaces de stabilisation latérale (25a, 25b et respectivement 25c, 25d) est dimensionnée par rapport à la largeur (t) du profil et à la longueur des volets au moins aproximativement en fonction du contour en section transversale de l'aile portante (8) dans la région de la racine de l'aile à l'avant du longeron avant (29).

3. Engin volant selon la revendication 1 ou 2, caractérisé par le fait qu'un dispositif de déploiement (38) actionnable à volonté est associé aux surfaces de stabilisation latérale (25) pour le mouvement de déploiement, ce dispositif comprenant un élément de commande (40) s'appuyant sur des parties fixes, pouvant être réglé par des ressorts (39) précomprimés et agissant sur les surfaces de stabilisation latérale (25) dans le sens d'un mouvement de déploiement.

FIG. 2

FIG. 1

FIG. 3

FIG. 4

FIG. 1a

0 112 448